**Europäisches Patentamt**

**European Patent Office**

**Office européen des brevets**

(19)

(11) Veröffentlichungsnummer : **0 062 953**
**B1**

## (12) EUROPÄISCHE PATENTSCHRIFT

(45) Veröffentlichungstag der Patentschrift :
**22.01.86**

(51) Int. Cl.⁴ : **B 28 D   1/12**

(21) Anmeldenummer : **82200420.6**

(22) Anmeldetag : **02.04.82**

(54) **Vorrichtung für das Sägen von Natur- oder Kunststein.**

(30) Priorität : **14.04.81 NL 8101852**

(43) Veröffentlichungstag der Anmeldung :
**20.10.82 Patentblatt 82/42**

(45) Bekanntmachung des Hinweises auf die Patenterteilung : **22.01.86 Patentblatt 86/04**

(84) Benannte Vertragsstaaten :
**BE DE FR IT**

(56) Entgegenhaltungen :
**BE-A-   669 994**
**DE-A- 1 427 696**
**FR-A- 1 258 694**
**FR-A- 2 289 312**

(73) Patentinhaber : **Zandee, Jan**
**Wissekerkseweg 21**
**NL-4458 SH 's Heer Arendskerke (Z) (NL)**

(72) Erfinder : **Zandee, Jan**
**Wissekerkseweg 21**
**NL-4458 SH 's Heer Arendskerke (Z) (NL)**

(74) Vertreter : **Siemens, Andreas Meinhard Ernest,**
**Dipl.-Ing.**
**SIEMENS & CIE. Roskam 8**
**NL-4813 GZ Breda (NL)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zum Sägen von Natur- oder Kunststein, bestehend aus einer Gattersäge, deren lineares Sägeblatt aus Teilen gebildet ist und eine Kühlmittelzufuhr aufweist zu Segmenten, die an der Sägeschneide gegeneinander in bezug auf die Längsmittelebene der Sägeschneide versetzt angebracht sind und sehr harte Materialteilchen enthalten.

Derartige Gatter-, Trenn- oder Schnellblattsägen werden verwendet für horizontales und/oder vertikales einfaches oder auch mehrfaches Sägen von Naturstein sowie von künstlich zusammengesetzten Gesteinen.

Es werden hohe Anforderungen gestellt an die Glätte des Schnittes sowie an die Gleichmässigkeit der Stärke der erzeugten Platten.

Während der letzten Jahre ist das Sägen von Gesteinen mit Breccien von wesentlicher Bedeutung geworden. Insbesondere beim Sägen solchen Materials, doch nicht ausschliesslich dabei, ist die Sägetechnik besonders schwierig wegen der unterschiedlichen Härte und Zähigkeit der Bestandteile des Materials.

Vielfach vorkommende Naturgesteine sind dabei, nebst Granit, Marmor wie Bardiglio, Astir, Bale, Travertin, ferner jedoch auch unterschiedliche andere, wie Diabas und Sandstein.

Künstliches Gestein ist Zement und Beton verschiedener Zusammensetzung, sowie Gemisch von Steinpulver und Kunstharz.

Die Segmente auf der Schneide des Gattersägeblattes enthalten Industriediamant, welcher natürlicher Provenienz doch auch künstlich hergestellt sein kann. In den Segmenten wird dieser entweder ausschliesslich oder aber in Gemischen mit anderen sehr harten Materialien, wie Wolframkarbid, verwendet. Ein bedeutendes Problem beim Sägen ist die Spannung und die Vibration des Sägeblattes.

Der bekannte Stand der diesbezüglichen Technik ist beschrieben in Schulze, R., « Wann sägt das Werkzeug richtig », in « Steinmetz und Bildhauer », Nr. 12 (Dezember 1980), Seiten 1086-1088.

In Löns, H. H., « Grundlagenuntersuchungen zum Gattersägen mit Diamantwerkzeugen », Dissertation an der Technischen Hochschule Hannover (1970), sind Untersuchungen in bezug auf die Parameter und den Zusammenhang zwischen der Geometrie und den anzuwendenden Kräften und Geschwindigkeiten eingehend behandelt. Stabile wenig vibrierende Sägeblätter ermöglichen kleinere Trennungsabstände, also dünnere Platten.

Die Schlammbildung sollte aus zwei Gründen so gering wie nur möglich sein. Schneidearbeit mit starker Schlammbildung macht Anwendung grösserer Trennungsabstände erforderlich.

Abgesehen von Materialverlust ergibt Anfall grosser Schlammengen ein erhebliches Abfuhrproblem für die Umwelt.

Für die Kühlung der Schneide und für die Abfuhr des Sägeschlamms bleibt es natürlich erforderlich mit Wasser zu spülen.

Im französischen Patent 2 289 3112 ist eine Vorrichtung für eine Gattersäge beschrieben, die ein durchgehendes Sägeblatt mit in der Mitte längsseitig eingefrästem Kanal und davon ausgehenden schmalen Bohrungen zur Zufuhr des Kühlmittels enthält.

Der ausgefräste Kanal ist bedeckt durch einen eingesetzten Metallstreifen. Die Bohrungen bewirken eine Schwächung des Blattes und die Wasserzufuhr ist wegen der engen Bohrungen zu gering. Es tritt Verstopfung auf, und weil das Blatt an den Stellen der Bohrungen schwächer ist, ist der Druck nicht gleichmässig und bekommen die Segmente abgerundete Kanten. Eine ausgleichende Abfuhr des Sägeschlamms entgegen der Schneiderichtung kann dabei nicht erreicht werden.

Diese Nachteile werden durch eine Vorrichtung gemäss der vorliegenden Erfindung behoben.

Die Vorrichtung zum Sägen von Natur- oder Kunststein gemäss der Erfindung besitzt ein lineares Sägeblatt, das aus Teilen gebildet ist und das eine Kühlmittelzufuhr aufweist zu Segmenten, die an der Sägeschneide gegeneinander in bezug auf die Längsmittelebene der Sägeschneider versetzt angebracht sind und sehr harte Materialteilchen enthalten, und sie ist dadurch gekennzeichnet, dass auf der Oberseite des Sägeblattes ein Wasserleiter angeordnet ist und einstückige Teile des Sägeblattes jeweils in bestimmten Abständen mittels zweier einander gegenüber angebrachter Flachstahlblechstücke verbunden sind, welche gemeinsam einen Hohlraum für die Wasserzufuhr aus dem Wasserleiter bilden, welcher Hohlraum an der Schneideseite offen ist und mit den versetzten Segmenten versehen ist.

Da die Unterseite der Wasserzufuhr gänzlich offen ist, kann das Wasser ungehindert zweckmässiger zur Schneide gelangen und tritt keine Verstopfung auf. Das Wasser benetzt die ganze Schneide. Es ergibt sich eine bessere Kühlung sowie eine wesentlich zweckmässigere Spülung des Sägeschlamms entlang der zwischen den beschriebenen Hohlräumen liegenden schmäleren Partien.

Mit Hilfe der Vorrichtung gemäss dieser Erfindung wird ein Verfahren ermöglicht, welches nicht nur arbeits- und wassersparend wirkt, doch auch Energieeinsparung zur Folge hat, wobei eine höhere Sägegeschwindigkeit erreicht werden kann und geringerer Verschleiss der Segmente auftritt, sodass ein erheblich geringerer Verbrauch an kostbarem Diamantmaterial erfolgt.

Die Segmente und Gattersägeblätter können in üblicher Art durch Schweissen, Stanzen, Klemmen und/oder Verleimen befestigt werden.

Der Wasserdruck kann der normale Leitungsdruck und auch höherer Druck, bis beispielsweise etwa 490,3 KPa (4 Atü), betragen.

Es hat sich ergeben, dass mit der Vorrichtung gemäss der Erfindung Naturstein aller Art, wie Granit, Marmor, Diabas und Travertin, sowie auch Gestein künstlicher Zusammensetzung, welches eventuell Breccien enthalten kann, schneller und mit geringerer Schnittbreite gesägt werden kann als mit bekannten Sägeblättern, sowie dass geringerer Wasserverbrauch und geringerer Anfall von Abfallmaterial (Grus, Staub und Schlamm) sehr überzeugend waren.

Die Erfindung wird an Hand der beiliegenden schematischen Zeichnungen erläutert.

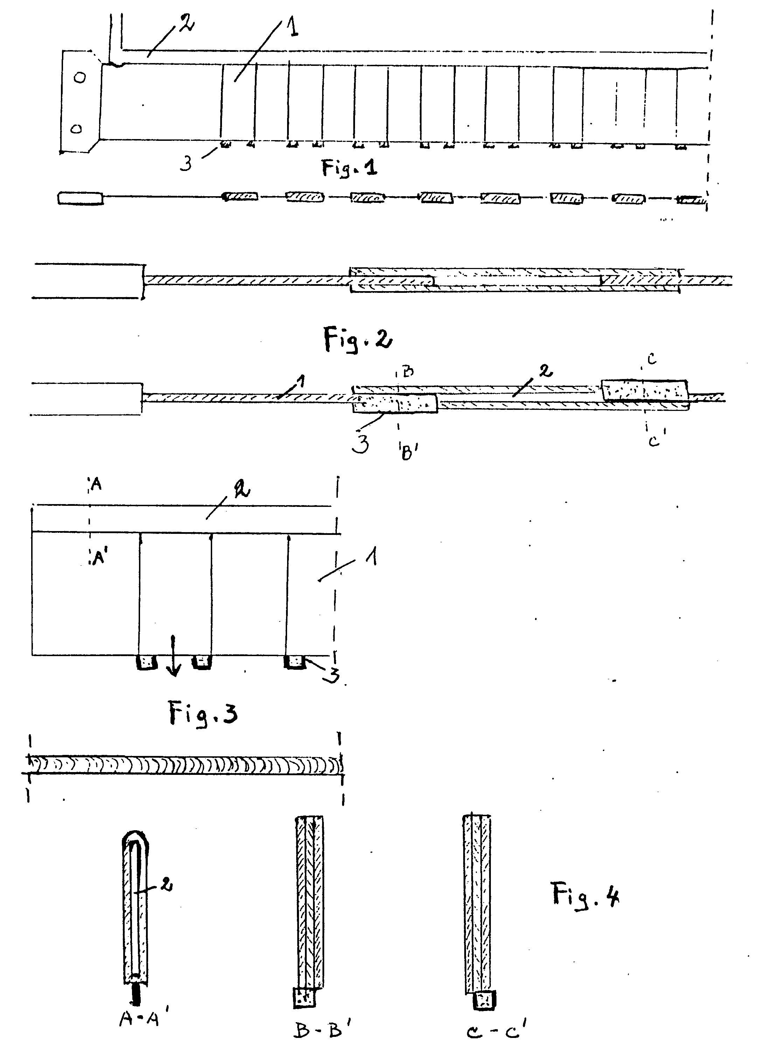

Figur 1 zeigt eine Seiten- und Obenansicht des erfindungsgemässen Sägeblattes in verkleinertem Massstab.

Figur 2 zeigt eine Oben- und Untenansicht des Sägeblattes mit Halterungen und Segmenten in etwa wahrend Abmessungen.

Figur 3 zeigt eine Seiten- und Obenansicht des Sägeblattes im einzelnen.

Figur 4 zeigt Querschnitte gemäss den in Figur 2 bzw. 3 angegebenen Linien A-A', B-B' und C-C'.

In diesen Abbildungen ist 1 das Sägeblatt, 2 der Wasserleiter und 3 die Halterung mit Segment.

Ersichtlich ist, dass das Sägeblatt gemäss der Erfindung aus Teilen zusammengesetzt ist, die jeweils in gewissen Abständen mittels zweier mit Abstand nebeneinanderliegender Flachstahlblechstücke verbunden sind, sodass diese gemeinsam einen der Wasserzufuhr dienenden Hohlraum umschliessen, welcher an der Sägeschneide offen ist und welcher ebenfalls an der Sägeschneide das Segment mit Diamant und/oder anderem sehr hartem Material enthält.

Die Flachstahlblechstücke bilden somit jeweils einen Zufuhrkanal zu der Stelle, an der der Sägeschnitt im Gestein gebildet wird.

Vorzugsweise besteht das Sägeblatt gemäss der Erfindung aus Blatteilen von etwa 80 mm Länge mit verbindenden Flachstahlblechstücken von etwa 90 mm Länge. Das Spannen erfolgt vorzugsweise durch Stanzen mit Hilfe von zylindrischen Verbindern.

Die angegebenen Dimensionen sind nur als Beispiele zu verstehen, auf welche die Erfindung nicht beschränkt ist.

**Patentanspruch**

Vorrichtung zum Sägen von Natur- oder Kunststein, bestehend aus einer Gattersäge, deren lineares Sägeblatt (1) aus Teilen gebildet ist und eine Kühlmittelzufuhr aufweist zu Segmenten, die an der Sägeschneide gegeneinander in bezug auf die Längsmittelebene der Sägeschneide versetzt angebracht sind, und sehr harte Materialteilchen enthalten, dadurch gekennzeichnet, dass auf der Oberseite des Sägeblattes (1) ein Wasserleiter (2) angeordnet ist und einstückige Teile des Sägeblattes jeweils in bestimmten Abständen mittels zweier einander gegenüber angebrachter Flachstahlblechstücke verbunden sind, welche gemeinsam einen Hohlraum für die Wasserzufuhr aus dem Wasserleiter (2) bilden, welcher Hohlraum an der Schneidenseite offen ist und mit den versetzten Segmenten (3) versehen ist.

**Claim**

An apparatus for sawing natural or artificial stones, said apparatus comprising a frame saw, the linear saw blade (1) being formed of parts, and which has a supply of cooling agent to segments, which are fixed at the edge of the blade in alternating positions with regard to the middle of the longitudinal plane of same, and which comprise particles of very hard material, characterized in that at the top side of the saw blade (1) a water conduit (2) is positioned and discrete parts of said saw blade are connected each at defined distances by means of two flat steel plate pieces positioned parallel spaced to each other, forming a hollow chamber for the water supply from the water conduit (2), said hollow chamber being open at the cutting edge and being provided with the alternatingly fixed segments (3).

**Revendication**

Dispositif pour le sciage de pierres naturelles ou artificielles composé d'une scie cadre dont la lame linéaire (1) est formée en parts, munie d'une conduite de réfrigérant vers des segments, qui au taillant sont disposés d'une manière de déplacement à l'égard du plan de longitude central, et qui comportent des particules extrêmement dures, caractérisé en ce qu'il y a une conduite d'eau (2) au côté supérieur de la lame (1) de la scie, et des parties individuelles de ladite lame sont liées au bout à quelque distance au moyen de deux plaques d'acier, l'une placée vis-à-vis de l'autre, constituant ensemble une cavité pour l'apport de l'eau hors de la conduite d'eau (2), et ladite cavité est ouverte au taillant et elle est prévue avec des segments (3) déplacés.

Fig. 1

Fig. 2

Fig. 3

Fig. 4

A-A'     B-B'     c-c'